# EUROPEAN PATENT APPLICATION

(11) **EP 1 180 873 A2**
(43) Date of publication of application: **20.02.2002**
(21) Application number: 01202904.7
(22) Date of filing: 31.07.2001
(51) Int. Cl.: H04L 12/28

(54) **Local area network services delivery system**

(30) Priority: 16.08.2000 GB 0020038
(71) Applicant: ROKE MANOR RESEARCH LIMITED, Romsey, Hampshire SO51 0ZN (GB)
(72) Inventor: McCann, Stephen, Rownhams, Southampton SO16 8DS (GB); Hancock, Robert, Bitterne Park, Southampton SO18 1NW (GB)
(74) Representative: Condon, Neil

(57) **Abstract**

A system is described for delivering information services to the users of Local Area Networks (LANs), and more particularly of wireless LANs (W-LANs), which readily lend themselves to usage in large-scale installations and which support considerable user-mobility around the installation. In order to provide improved delivery to mobile users of location-specific information services, the system is provided with a plurality of wireless access points, distributed around the installation. The system can identify an access point receiving an information request from a mobile user, and can correlate the position of that access point with that of at least one other access point and/or with the position of at least one other feature of the site covered by the W-LAN installation, depending upon the nature of the request. The correlated positional information can be used to determine at least part of the information content supplied to the mobile user.

## Description

This invention relates to systems for delivering information services to the users of Local Area Networks (LANs), and it relates especially to such systems as are designed to take advantage of certain opportunities afforded by wireless LANs (W-LANs), which readily lend themselves to usage in large-scale installations, such as airports, warehousing sites and retail outlets, and which support considerable user-mobility around the installation.

In W-LAN installations, there are provided distributed access points which terminate the air interface to the mobile user and connect into an existing, wired, LAN. The nature of the air interfaces at such access points is that they are effective over only a relatively short range and thus they locate, at least to an extent, the position of the user (relative to the installation) when employed to gain access to the W-LAN.

This invention aims to take advantage of the foregoing to provide improved delivery to mobile users of location-specific information services and according to the invention there is provided a system for delivering information services to the users of a wireless Local Area Network (W-LAN) installation comprising a plurality of access points, distributed around the installation and providing wireless access to the installation; the system including means for identifying an access point receiving an information request from a mobile user of the installation, for correlating the position of that access point relative to the installation with that of at least one other access point and/or with the position of at least one other feature of the site covered by the W-LAN installation, depending upon the nature of the request, and for utilising the correlated positional information when supplying the requested information to the mobile user via said first-mentioned access point.

Preferably, the correlated positional information, or information derived therefrom, is contained overtly in the information supplied to the mobile user, as an orientational aid to the user.

The information supplied to the user may be graphic or textual and, if graphic, preferably displays part at least of the correlated positional information so as to assist the user in locating a feature about which a specific information request has been submitted and/or in which the request itself or a profile of the user's interests, held by a data storage, acquisition and delivery component of the installation and possibly built up from previously submitted information requests, indicates potential interest.

The data storage, acquisition and delivery component can conveniently comprise a service selection gateway (SSG) device connected and configured to handle all information requests made to the W-LAN installation.

The SSG device is preferably capable of logging, within a given time period, all communications from each individual user with the W-LAN installation, and thus, in the event that a user is mobile relative to the installation to the extent that different communications are made via different access points, the direction of travel of the user within the installation can be recognised. In the event that this information as to the direction of user travel is available, it can be used to help the user to locate a specific target feature identified in an information request submitted by the user, and/or to alert the user to the presence of a feature of potential interest.

The system can of course handle information provided to the installation by a user as well as, or instead of, the supply of requested and/or other relevant information to the user.

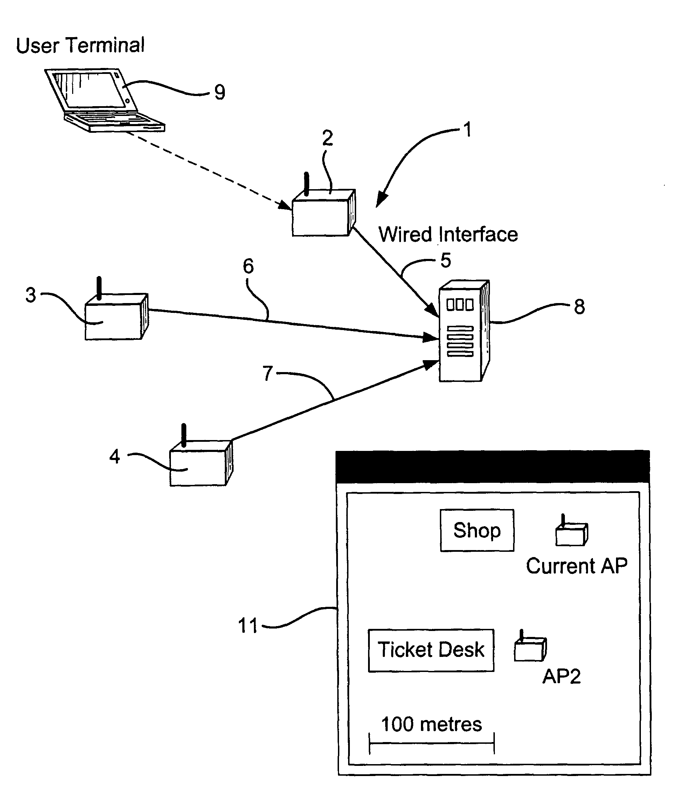

In order that the invention may be clearly understood and readily carried into effect, one embodiment of the invention will now be described, by way of example only, with reference to the accompanying drawing, the single figure of which shows, in schematic form, part of a system in accordance with an example of the invention.

Referring now to the drawing, there is shown schematically a portion of a W-LAN installation, generally shown at 1, which includes access points 2, 3 and 4, each connected by a respective wired interface 5, 6, 7 to a service selection gateway device (SSG) 8 which constitutes a data storage, acquisition and delivery component, connected and configured to handle all information requests made to the W-LAN installation 1.

A mobile user of the installation is indicated at 9; there being an air interface, permitting wireless connection of the user 9 to the LAN 1, at each of the access points 2, 3 and 4. These access points are key elements of the system since, by their nature, being short-range (especially with indoor installations) they provide the system with some information as to the whereabouts of any user employing them to access the installation.

When the mobile user 9 accesses the system 1, the identity of the user is announced to the system, and the SSG device 8, moreover, recognises the specific access point, in this case, access point 2, through which the installation is being accessed. Thus, the user is known and the approximate location of the user relative to the installation is known, and by correlating this information with the specific request currently submitted by the user and/or with any other information that may be held in the SSG device 8 about the interests of that user from previous requests for and/or submissions of information, the information provided to the user can be enhanced to the extent of incorporating geographic/orientational information relative to the whereabouts of the user and/or presenting the user with information specifically targeting features at or near the access point currently being employed by that user.

With regard to the capability of the SSG device 8 to detect the access point in current use by a user, it will be appreciated that when a user accesses a web page provided by the SSG device, the location of the access point can be determined by analysing the HTTP registration message from the mobile user.

Thus, it will be appreciated from the foregoing that the geographical location of the access point in current use by a user is used by a web-page server incorporated within the SSG device 8 to create either map-based web pages or textual information responsive to the user's request. In the drawing, the outline 11 shows a possible layout of a graphics page provided by the system to a user currently accessing the installation via access point 2 and requesting information as to the whereabouts of a specific feature, in this case a ticket desk, within the site covered by the installation. As mentioned previously, if the user has recently been accessing the installation via other access points, the SSG device 8 can utilise this information to provide a rough indication of the user's direction of travel on the site.

The web pages such as 11 provided by the system are dynamic and individually constructed for each mobile user. The pages may be downloaded by the mobile user into a browser operating on suitable equipment.

Information of the foregoing kind is better suited to the mobile user unique to a W-LAN installation, rather than a cellular user, for several reasons, the first being that the accuracy of determination of the whereabouts of the user is better than that of a cellular system, because the user is known to be close to the access point due to the limited range of the air interface. Furthermore, the user will be static in relation to the access point currently in use, and will thus be capable of receiving information of richer content (such as pay-per-view video) than that of a cellular counterpart. Moreover, the privacy factor is higher than that of a cellular user, since the user retrieves only directly pertinent information, and does not pass it on to others.

The positional or geographic information as to the user's current whereabouts can be utilised by the SSG device 8 (or some other component of the system) to deliver location-specific information back to the user. Such information may include local commercial opportunities for the mobile W-LAN user and/or for outlets or service providers situated near the access point currently in use.

Some examples of outlets/services to which a user might be introduced by means of the system are shops and restaurants; help/information kiosks; local accommodation; local map assistance; local transport; local services such as photocopying, printing and telephones; and webcam sites.

The system may also provide for the user to register an interest in certain types of goods or services, thereby stimulating the SSG device to automatically deliver relevant information to the user at times when the user is known to be in the vicinity of a provider of such goods or services. The locations of adjacent access points can also be presented to the user if it appears, either from direct information requests submitted by the user or as on the basis of analysis of the user's recent communication history, that such information would be of value to the user.

It will be readily appreciated that the server (http) is able to determine the current location of the user because it can determine the IP source address of the data request and correlate it with the user's identity. This is due to the W-LAN system and address assignment being controlled by another server in the W-LAN itself. The server can then determine the current access point through which the user of that address is accessing the network.

## Claims

1. A system for delivering information services to the users of a wireless Local Area Network (W-LAN) installation comprising a plurality of access points, distributed around the installation and providing wireless access to the installation; the system including means for identifying an access point receiving an information request from a mobile user of the installation, for correlating the position of that access point relative to the installation with that of at least one other access point and/or with the position of at least one other feature of the site covered by the W-LAN installation, depending upon the nature of the request, and for utilising the correlated positional information when supplying the requested information to the mobile user via said first-mentioned access point.

2. A system according to Claim 1, wherein the correlated positional information, or information derived therefrom, is contained in the information supplied to the mobile user, as an orientational aid to the user.

3. A system according to Claim 1 or Claim 2, wherein the information supplied to the user is graphical.

4. A system according to Claim 3, wherein the graphical information supplied to the user displays part at least of the correlated positional information so as to assist the user in locating a feature about which a specific information request has been submitted and/or in which the request itself or a profile of the user's interests indicates potential interest.

5. A system according to claim 4, comprising a data storage, acquisition and delivery component of the installation configured to perform said functions of identifying said access point receiving an information request from a mobile user of the installation, correlating the position of that access point relative to the installation with that of at least one other access point and/or with the position of at least one other feature of the site covered by the W-LAN installation, and utilising the correlated positional information when supplying the requested information to the mobile user.

6. A system according to Claim 5, wherein the data storage, acquisition and delivery component comprises a service selection gateway (SSG) device connected and configured to handle all information requests made to the W-LAN installation.

7. A system according to Claim 5 or Claim 6, wherein the data storage, acquisition and delivery component is capable of logging, within a given time period, all communications from each individual user with the W-LAN installation, whereby, in the event that a user is mobile relative to the installation to the extent that different communications are made via different access points, the direction of travel of the user within the installation can be recognised.

8. A system according to Claim 7, wherein said information as to the direction of user travel is used to help the user to locate a specific target feature identified in an information request submitted by the user, and/or to alert the user to the presence of a feature of potential interest.

9. A system according to any preceding claim, wherein the information supplied to the user is textual.

10. A system according to any preceding claim, wherein the information supplied to the user is audio-based.

11. A system according to any preceding claim, configured to handle information provided to the installation by a user in addition to the supply of requested and/or other relevant information to the user.

12. A method of providing information to a user of a mobile station operating in a wireless Local Area Network (W-LAN) which network comprises a plurality of locationally spaced wireless access points, the method comprising:
receiving at one of the access points a signal transmitted from the mobile station;
identifying which access point the signal has been received at; and
transmitting to the mobile station information relating to the area in which the identified access point is located.
